# EUROPÄISCHE PATENTSCHRIFT

(11) **EP 0 890 271 B1**
(45) Veröffentlichungstag und Bekanntmachung des Hinweises auf die Patenterteilung: **13.02.2002**
(21) Anmeldenummer: 96946176.3
(22) Anmeldetag: 07.12.1996
(51) Int. Cl.: H04Q 7/20

(54) **PUNKT-ZU-MEHRPUNKT FUNKÜBERTRAGUNGSSYSTEM**
POINT-MULTIPOINT RADIO TRANSMISSION SYSTEM
SYSTEME DE RADIOTRANSMISSION POINT-MULTIPOINT

(30) Priorität: 27.03.1996 DE 19612108
(43) Veröffentlichungstag der Anmeldung: 13.01.1999
(73) Patentinhaber: ROBERT BOSCH GMBH, 70442 Stuttgart (DE)
(72) Erfinder: GÖCKLER, Heinz, D-71522 Backnang (DE); ALBERTY, Thomas, D-71522 Backnang (DE)
(74) Vertreter: Camp, Ronald
(86) Internationale Anmeldenummer: DE9602349
(87) Internationale Veröffentlichungsnummer: WO9736433

(56) Entgegenhaltungen:
- DE-C- 4 426 183
- GB-A- 2 098 029
- US-A- 4 385 392
- US-A- 4 706 239
- US-A- 4 785 450
- US-A- 4 965 852
- US-A- 5 208 804
- MCGUIRE R J: "TECHNOLOGIES FOR AN EXCHANGE RADIO" PROCEEDINGS OF THE NATIONAL COMMUNICATIONS FORUM, Bd. 43, Nr. 2, 2.Oktober 1989, Seiten 869-882, XP000224999
- THO LE-NGOC ET AL: "ISDN IMPLEMENTATION FOR A POINT-TO-MULTIPOINT SUBSCRIBER RADIO SYSTEM" COMPUTER COMMUNICATIONS, Bd. 13, Nr. 3, 1.April 1990, Seiten 131-135, XP000116538

## Beschreibung

### Stand der Technik

Die vorliegende Erfindung betrifft ein Punkt-zu-Mehrpunkt Funkübertragungssystem, bestehend aus einer Zentralstation und mehreren Teilnehmerstationen, wobei die Übertragungskanäle zwischen der Zentralstation und den Teilnehmerstationen bedarfsweise zuteilbar sind.

Funkübertragungssysteme, seien es terrestrische Richtfunksysteme oder Satellitenübertragungssysteme, erlauben es, neue Funkverbindungen sehr schnell zu installieren oder bestehende zu ergänzen. Bei solchen Funkübertragungssystemen soll das zur Verfügung stehende Frequenzspektrum möglichst optimal ausgenutzt werden. Diese Forderung läßt sich mit Punkt-zu-Mehrpunkt Funkübertragungssystemen (Richtfunk, Satellitenfunk) verwirklichen.

Ein Punkt-zu-Mehrpunkt Richtfunksystem ist im Mikrowellenmagazin Vol. 10, Nummer 6, 1984, S. 629, 630 dargelegt. Danach läßt sich die Ausnutzung des Frequenzbandes des zur Verfügung stehenden Funkkanals durch eine nur bedarfsweise Belegung des erforderlichen Frequenzbandes verbessern. Die Kommunikation zwischen der Zentralstation und den einzelnen Teilnehmerstationen erfolgt entweder durch Vielfachzugriff im Frequenzmultiplex (FDMA) oder im Zeitmultiplex (TDMA), wobei die Frequenzkanäle oder Zeitschlitze je nach Bedarf der Teilnehmer zugeteilt werden.

Bei einem Punkt-zu-Mehrpunkt Richtfunksystem gemäß der deutschen Anmeldung DE 44 26 183 A1 wird die Übertragungskapazität dadurch flexibel an den Bedarf der Teilnehmer angepaßt, daß die Bandbreite der einzelnen Übertragungskanäle auf die von den einzelnen Teilnehmern jeweils geforderte Datenübertragungsrate eingestellt wird. Auch ist eine veränderbare Einstellung der Modulationsart oder des Modulationsgrades (zum Beispiel n-PSK mit n = 2 ... 16 oder M-QAM mit M = 4 ... 256) auf den einzelnen Übertragungskanälen vorgesehen.

Der Erfindung liegt nun die Aufgabe zugrunde, ein Punkt-zu-Mehrpunkt Funkübertragungssystem der eingangs genannten Art anzugeben, das eine flexible Zuweisung und Anpassung von Übertragungskapazitäten auf die zugeschalteten Teilnehmerstationen ermöglicht, ohne daß bestehende Funkverbindungen unterbrochen oder gestört werden.

### Vorteile der Erfindung

Die gestellte Aufgabe wird mit den Merkmalen des Patentanspruchs 1 dadurch gelöst, daß eine Steuereinrichtung vorhanden ist, welche bei einer Veränderung der Übertragungskanäle in Modems, mit denen sowohl die Zentralstation als auch jede Teilnehmerstation ausgestattet ist, ein oder mehrere Übertragungsparameter so einstellt, daß die Bandbreite des zur Verfügung stehenden Funkkanals optimal ausgenutzt wird. Dabei weist jedes Modem zwei Sende- und zwei Empfangskanäle auf, und die Signalübertragung im Modem erfolgt nur über einen der beiden Sende- bzw. Empfangskanäle. Bei Änderung der Übertragungskanäle erfolgt in dem gerade nicht in Betrieb befindlichen Sende- bzw. Empfangskanal die Einstellung auf die neuen Übertragungsparameter, während die Signalübertragung in dem anderen Sende- bzw. Empfangskanal fortgesetzt wird. Nach abgeschlossener Akquisition der neuen Übertragungsparameter wird auf den zuvor nicht in Beterieb befindlichen Sende- bzw. Empfangskanal umgeschaltet. Es ist eine erste Frequenzweiche vorgesehen, welche das gesamte für das Aussenden von Signalen zur Verfügung stehende Frequenzband in mindestens zwei Teilbänder aufteilt, wobei die Signale der Sendekanäle den Teilbändern wahlweise zuteilbar sind. Außerdem ist eine zweite Frequenzweiche vorgesehen, welche das für Empfangssignale zur Verfügung stehende gesamte Frequenzband in mindestens zwei Teilbänder aufteilt, wobei die Signale der Teilbänder wahlweise den Empfangskanälen zuteilbar sind.

Mit den genannten Maßnahmen kann bei einem Punkt-zu-Mehrpunkt Funkübertragungssystem der zur Verfügung stehende Funkkanal sehr flexibel an die erforderlichen Übertragungskanäle der einzelnen Teilnehmer angepaßt werden, ohne daß Funkverbindungen unterbrochen werden müssen oder gestört werden. Es können alle Übertragungsparameter mit dem Ziel sowohl einer effizienten Nutzung des Funkkanals als auch einer Optimierung der Signalübertragungsqualität gesteuert werden. Der Einsatz der digitalen Frequenzweichen, deren Teilbänder den Sende- bzw. Empfangskanälen wahlweise zugeordnet werden können, ermöglicht eine sehr flexible Aufteilung der Sende- und Empfangskanäle. Außerdem kann die digitale Frequenzweiche die Abtastfrequenz ihres Eingangssignals reduzieren bzw. erhöhen (zum Beispiel halbieren bzw. verdoppeln), so daß nachfolgende Interpolatoren oder Dezimatoren geringere Interpolations- oder Dezimationsfaktoren realisieren müssen, wodurch sich der Schaltungsaufwand verringert.

Zweckmäßige Weiterbildungen der Erfindung gehen aus den Unteransprüchen hervor.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild eines Punkt-zu-Mehrpunkt Funkübertragungssystems,
Figur 2 ein Blockschaltbild eines Modems und
Figuren 3,4,5,6 Blockschaltbilder von Modems mit verschiedenartig gemultiplexten Sende- bzw. Empfangskanälen.

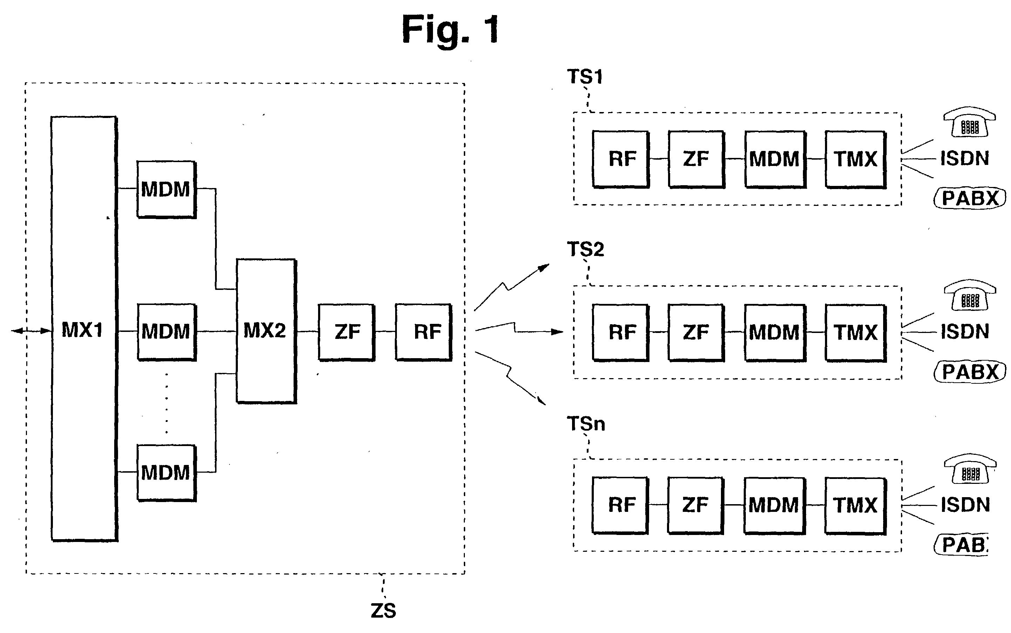

Das in Figur 1 prinzipiell dargestellte Punkt-zu-Mehrpunkt Funkübertragungssystem besteht aus einer Zentralstation ZS und mehreren Teilnehmerstationen TS1, TS2 ..., TSn. Die Zentralstation ZS weist soviele parallel geschaltete Modems MDM auf, wie maximal Teilnehmerstationen TS1, TS2 ..., TSn eine Funkverbindung mit der Zentralstation ZS aufnehmen können. Alle Modems MDM der Zentralstation ZS sind an beiden Ausgängen über Multiplexer/Demultiplexer MX1 und MX2 zusammengeschaltet. Der erste Multiplexer/Demultiplexer MX1 stellt die Verbindung zu anderen Nachrichtennetzen her. An den zweiten Multiplexer/Demultiplexer MX2 ist ein Schaltblock ZF angeschlossen, der die Umsetzung der auszusendenden oder empfangenen Signale in eine Zwischenfrequenzebene vornimmt. Daran schließt sich eine Sende-/Empfangseinheit (Frontend) RF an.

Einen ähnlichen Aufbau weisen die einzelnen Teilnehmerstationen TS1, TS2 ..., TSn auf. An eine Sende/Empfangseinheit RF schließt sich eine Zwischenfrequenzschaltung ZF an, die wiederum mit einem Modem MDM verbunden ist. Ein Terminal-Multiplexer/Demultiplexer TMX stellt die Verbindung zwischen dem Modem MDM und Endstelleneinrichtungen (zum Beispiel Telefon) oder öffentlichen oder privaten Nachrichtennetzen (zum Beispiel ISDN, PABX) her.

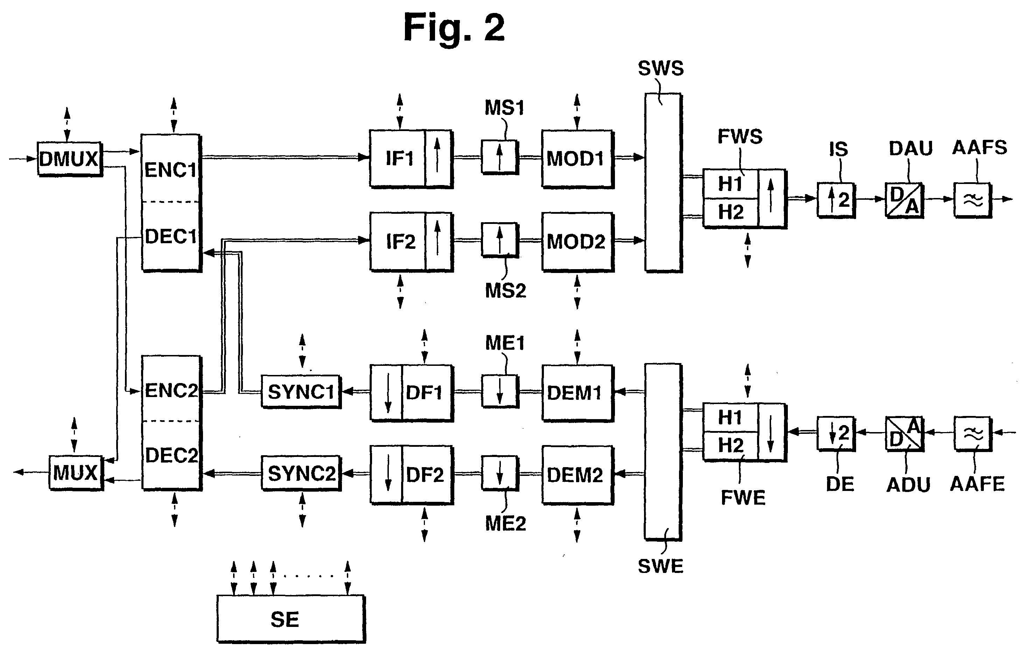

Die Figur 2 zeigt ein Beispiel für den Aufbau eines Modems MDM, wie es in gleicher Weise in der Zentralstation ZS und in den einzelnen Teilnehmerstationen TS1, TS2 ..., TSn eingesetzt ist. Das Modem weist zwei Sende- und zwei Empfangskanäle auf. Dabei ist für jeden Sendekanal und für jeden Empfangskanal in dem hier dargestellten Ausführungsbeispiel ein eigener schaltungstechnisch relisierter Signalpfad vorgesehen.

In Senderichtung schaltet ein Demultiplexer DMUX ein auszusendendes Datensignal an einen von zwei Encodern ENC1 oder ENC2 durch. Jeder Encoder ENC1, ENC2 gehört zu einem der beiden Sende-Signalpfade, deren Verbindungsleitungen doppellinig gezeichnet sind, weil hier die Datensignale komplex sind, also einen Real- und einen Imaginärteil besitzen. Auf jeden Encoder ENC1, ENC2 folgt jeweils ein digitales Interpolationsfilter IF1, IF2 mit variablem Interpolationsfaktor. Daran schließt sich in jedem Signalpfad ein Modulator MOD1, MOD2 an, dem aber noch ein Interpolator MS1, MS2 mit festem Interpolationsfaktor vorgeschaltet sein kann. Jeder der beiden Modulatoren MOD1, MOD2 ist auf einen von zwei Sendekanälen abgestimmt. Die Ausgänge beider Modulatoren MOD1 und MOD2 sind über einen Schalter SWS einer Frequenzweiche FWS mit zwei Teilband-Filtern H1, H2 zugeführt. Eine solche Frequenzweiche, bestehend aus zwei komplexen Halbbandfiltern, ist beispielsweise aus der Zeitschrift "Frequenz", 42 (1988), Nummer 6-7, S. 181-189, bekannt. Die Teilfrequenzbänder der Teilband-Filter H1, H2 sind so gewählt, daß sie das gesamte für das Aussenden von Signalen zur Verfügung stehende Frequenzband abdecken. Es ist zweckmäßig, wenn sich die Teilfrequenzbänder gegenseitig überlappen, so daß auch Signale mit einer in der Mitte des Gesamtfrequenzbandes liegenden Frequenz von der Frequenzweiche FWS übertragen werden können. Die Mittenfrequenzen fm der beiden Teilband-Filter H1, H2 können zum Beispiel bei fm = (2m-1) fa/8 mit m = 1, 2, 3 oder 4 liegen, wobei fa die Abtastfrequenz des Ausgangssignals der Frequenzweiche FWS ist. Beispielsweise kann das erste Teilband-Filter H1 die Mittenfrequenz fm = 3fa/8 und das zweite Teilband-Filter H2 die Mittenfrequenz fm = 5fa/8 haben. Die Prequenzweiche FWS führt außerdem eine Abtastratenerhöhung (Interpolation) durch, so daß der Interpolationsfaktor der variablen Interpolationsfilter IF1, IF2 niedriger gewählt werden kann.

Der Schalter SWS kann wahlweise die einzelnen Sendekanäle auf das eine oder andere Teilband-Filter H1 oder H2 der Frequenzweiche FWS durchschalten. Gesteuert wird der Schalter SWS von einer unten noch näher beschriebenen Steuereinheit SE.

Das komplexe digitale Ausgangssignal der Frequenzweiche FWS wird von einem Interpolator IS mit festem Interpolationsfaktor 2 in ein reelles digitales Signal umgesetzt (vgl. z.B. DE 36 21 737 C2). Danach wird das reelle digitale Datensignal von einem Digital/Analog-Umsetzer DAU in ein analoges Signal gewandelt, das anschließend über ein Antialiasing-Filter AAFS geführt wird.

In entgegengesetzter Richtung - in Empfangsrichtung - gelangt ein empfangenes, analoges Datensignal über ein Antialiasing-Filter AAFE an einen Analog/Digital-Umsetzer ADU. Ein Dezimator DE mit festem Dezimationsfaktor 2 (vgl. z.B. DE 36 21 737 C2) setzt das reelle digitale Ausgangssignal des Analog/Digital-Umsetzers ADU in ein komplexes digitales Signal um. Dieses komplexe Digitalsignal wird von einer Frequenzweiche FWE und einem anschließenden Schalter SWE auf jeweils einen von zwei Empfangs-Signalpfaden durchgeschaltet. Was die Lage der Teilfrequenzbänder der Frequenzweiche FWE angeht, gilt das bereits im Zusammenhang mit der Frequenzweiche FWS für die Sendekanäle Gesagte. Die Frequenzweiche FWE führt eine Abtastratenverminderung (Dezimation) durch. Wegen der von der Frequenzweiche veranlaßten Aufteilung des gesamten für die Empfangssignale zur Verfügung stehenden Frequenzbandes in schmalere Teilbänder wird für die einzelnen Empfangskanäle das Abtasttheorem erfüllt. Es gibt also bei der Demodulation keine störenden Überfaltungen, weil die Bedingung eingehalten wird, daß die Abtastfrequenz mindestens so groß sein muß wie die Signalbandbreite (entspricht einem Teilband der Frequenzweiche). Das hier im Zusammenhang mit den Empfangskanälen zum Abtasttheorem Gesagte gilt in analoger Weise auch für die Sendekanäle.

Der Schalter SWE kann die Ausgangssignale der Teilband-Filter H1, H2 der Frequenzweiche FEW in beliebiger Kombination auf die nachfolgenden Empfangs-Signalpfade durchschalten.

In jedem Empfangs-Signalpfad befindet sich ein komplexer digitaler Demodulator DEM1 und DEM2, von denen jeder auf einen von zwei Empfangskanälen abgestimmt ist. Jedem Demodulator DEM1, DEM2 ist ein Dezimationsfilter DF1, DF2 mit variablem Dezimationsfaktor (matched filter) - eventuell unter Zwischenschaltung eines Dezimators ME1, ME2 mit festem Dezimationsfaktor - nachgeschaltet. Da bereits die Frequenzweiche FWE eine Abtastratenverminderung durchführt, kann der Dezimationsfaktor des variablen Dezimationsfilters DF1, DF2 niedriger gewählt werden.

Die Interpolatoren und Dezimatoren zur Änderung der Abtastfrequenz um einen festen Faktor sind vorzugsweise als nichtrekursive (FIR) Filter mit bedarfsweise linearer Phase ausgebildet, wobei im linearphasigen Fall durch Nutzung der Koeffizientensymmetrie besonders aufwandsgünstige Schaltungen resultieren. Weitergehende Aufwandsverminderungen sind erzielbar durch die Ausbildung dieser Filter als Halbband-Filter. Schließlich kann die Operationsrate (Zahl der Operationen pro Zeiteinheit) auf ein Minimum gebracht werden, indem diese Interpolatoren und Dezimatoren als Polyphasenfilter realisiert werden. Eine weitere Verminderung des Schaltungsaufwandes und auch der Verlustleistung erreicht man dadurch, daß bei den festen Dezimatoren und Interpolatoren die allgemeinen Multiplikationen durch stellenrichtige Addition und/oder Subtraktion der Zustandsgrößen ersetzt weden (CSD-Code Darstellung der Koeffizienten).

Die Dezimationsfilter DF1, DF2, wie auch die Interpolationsfilter IF1, IF2 erfüllen die Wurzel-Nyquist-Bedingung. Der Aufbau und die Funktionsweise solcher variabler Dezimations- und Interpolationsfilter sind in den "Proceedings Second European Conference on Satellite Communications" Liege/Belgien, Oktober 1991, ESA SP-332, S. 457-464, beschrieben.

In den beiden Empfangs-Signalpfaden befinden sich Synchronisierschaltungen SYNC1 und SYNC2, wie sie ebenfalls aus "Proceedings Second European Conference on Satellite Communications" bekannt sind. Sie synchronisieren die Schaltungen im jeweiligen Signalpfad auf die Trägerfrequenz, die Trägerphase und den Abtasttakt des empfangenen Datensignals auf. Damit ist das Modem unabhängig von Synchronisationssignalen, die ansonsten zusammen mit den Empfangssignalen übertragen werden müßten.

Am Ende eines jeden Empfangs-Signalpfades befindet sich ein Decoder DEC1, DEC2. Sowohl die Codierung in den Sende-Signalpfaden als auch die Decodierung in den Empfangs-Signalpfaden geschieht vorzugsweise mit Viterbi-Codern/Decodern. Die Ausgänge beider Decoder DEC1, DEC2 führen zu einem Multiplexer MUX.

Die komplexen Trägerschwingungen für die komplexen digitalen Modulatoren MOD1, MOD2 und Demodulatoren DEM1, DEM2 werden zweckmäßigerweise mit der Methode der direkten digitalen Synthese (DDS) (vergleiche "An Analysis of the Output Spectrum of Direct Digital Frequency Synthesizers in the Presence of Phase-Accumulator Truncation", IEEE 1987, 41st. Annual Frequency Control Symposium, S. 495 ff) oder der linearen interpolierten digitalen Synthese erzeugt.

Das Punkt-zu-Mehrpunkt Funkübertragungssystem soll, wie eingangs angegeben, eine sehr flexible Zuteilung von Übertragungskanälen zwischen der Zentralstation und Teilnehmerstationen ermöglichen, wobei der zur Verfügung stehende Funkkanal optimal ausgenutzt wird. Verändert sich die Zahl der benötigten Übertragungskanäle, weil ein oder mehrere Teilnehmerstationen einen Datenaustausch mit der Zentralstation neu aufnehmen oder die Datenübertragung abbrechen, so werden von einer in der Zentralstation ZS vorhandenen Steuereinrichtung SE aus die Übertragungsparameter in den von der Änderung der Übertraungskanäle betroffenen Modems in der Zentralstation und in Teilnehmerstationen so verändert, daß die Übertragungskanäle den Funkkanal effizient belegen. Zu den veränderbaren Übertragungsparametern gehören beispielsweise die Datenrate, die Modulationsart oder der Modulationsgrad (zum Beispiel n-PSK mit n = 2 ... 16 oder M-QAM mit M = 4 ... 256), die Codierung, die Kanalfrequenz oder auch der Sendepegel und Parameter zur Signalqualitätsbeurteilung, um eine vorgegebene Datenübertragungsqualität (zum Beispiel Bitfehlerrate <10⁻⁷) sicherzustellen und Funkfeldeinflüsse (fadings, Reflexionen) zu minimieren.

Die Steuereinrichtung SE berechnet also bei einer Änderung der Zahl der erforderlichen Übertragungskanäle die Übertragungsparameter nach den genannten Gesichtspunkten der effizienten Ausnutzung der Gesamtbandbreite des Funkkanals und einer optimalen Signalübertragungsqualität. Diese veränderten Übertragungsparameter gibt die Steuereinrichtung SE als Steuersignale (als strichlierte Doppelpfeil-Linien in den Figuren angedeutet) an die betreffenden Schaltblöcke in den Modems ab. Die Steuersignale für die Modems in den Teilnehmerstationen werden beispielsweise über einen Signalisierungskanal übertragen, der entweder an einen oder mehrere Nutzsignalkanäle angehängt ist oder als eigener Broadcast-Kanal ausgestrahlt wird.

Von den Übertragungsparametern wird die Datenrate in den variablen Interpolationsfiltern IF1, IF2 und Dezimationsfiltern DF1, DF2 eingestellt. Änderungen der Kanalfrequenz werden in den Modulatoren MOD1, MOD2 und Demodulatoren DEM1, DEM2 vorgenommen, und Änderungen der Modulation und der Codierung erfolgen in den Encodern ENC1, ENC2 und den Decodern DEC1, DEC2.

Wie oben beschrieben, gibt es in jedem Modem zwei Sende- und zwei Empfangskanäle. Die Signalübertragung erfolgt immer nur in einem Sende- und einem Empfangskanal. Der andere Sende- bzw. Empfangskanal ist dann nicht aktiv. Wenn die Steuereinrichtung SE eine Anforderung für eine Änderung der Übertragungskanäle erhält und sie darauf die Übertragungsparameter dementsprechend neu berechnet, gibt sie ihre neuen Übertragungsparameter als Steuersignale an die betreffenden Schaltblöcke für den nicht eingeschalteten Sende- bzw. Empfangkanal ab. Sobald die neuen Übertragungsparameter in den betreffenden Modems der Zentralstation eingestellt worden sind und auch die Teilnehmerstationen die Akquisition der neuen Übertragungsparameter über den Signalisierungskanal bei der Steuereinrichtung SE bestätigt haben, wird die Signalübertragung und -verarbeitung in allen betroffenen Modems in dem anderen Kanal, in dem die Umstellung auf die geänderten Übertragungsparameter erfolgt ist, fortgesetzt. Wenn also eine Änderung der Übertragungsparameter nötig ist, weil zum Beispiel ein oder mehrere zusätzliche Übertragungskanäle angefordert werden oder ein anderer Bedarf an Frequenzbändern vorliegt, wird die Signalübertragung so lange mit den alten Übertragungsparametern fortgeführt, bis die neuen Übertraungsparameter in dem noch nicht aktivierten Sende- bzw. Empfangskanal eingestellt worden sind, und erst dann wird abrupt auf diesen Kanal umgeschaltet. Dadurch werden störende Unterbrechungen bei der Signalübertragung vermieden.

Die Auswahl des Sende- und Empfangskanals in den betreffenden Modems trifft die Steuereinheit SE, indem sie die Modulations- beziehungsweise Demodulationsfrequenz desjenigen Sende- bzw. Empfangskanals vorgibt, der nach Änderung der Übertragungsparameter die Übertragung fortsetzen sollen.

In den vorangehend beschriebenen Ausführungsbeispielen ist jedem Sende- beziehungsweise Empfangskanal ein eigener Signalpfad zugeordnet, d.h. für die Sende- und für die Empfangsrichtung sind ein großer Teil der Schaltungsblöcke doppelt vorhanden. Dieser Aufwand an Schaltungen kann dadurch verringert werden, daß Teile sowohl der beiden Sende-Signalpfade als auch der beiden Empfangs-Signalpfade im Zeitmultiplex betrieben werden.

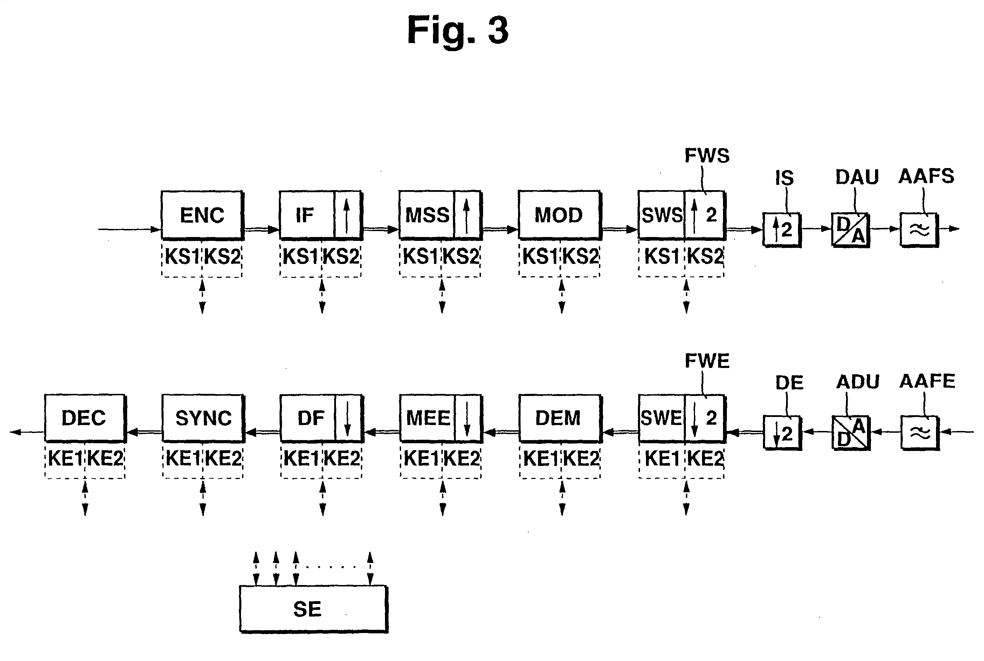

In der Figur 3 ist ein Signalpfad für die beiden Sendekanäle und ein Signalpfad für die beiden Empfangskanäle dargestellt. Der Sende-Signalpfad besitzt für beide Sendekanäle einen Encoder ENC, ein variables Interpolationsfilter IF und einen Modulator MOD. Außerdem kann zwischen dem variablen Interpolationsfilter IF und dem Modulator MOD noch ein weiterer Interpolator MSS mit einem festen Interpolationsfaktor eingefügt werden, wie der Figur 3 zu entnehmen ist. Auf die Funktion der einzelnen Schaltblöcke ENC, IF, MSS, MOD und der sich an die umschaltbare Frequenzweiche SWS, FWS anschließenden Schaltblöcke (Interpolator IS, Digital/Analog-Umsetzer DAU, Antialiasing-Filter AAFS) wird hier nicht näher eingegangen, weil sie im Zusammenhang mit dem in Figur 2 dargestellten Ausführungsbeispiel schon näher beschrieben worden ist.

Dasselbe gilt für die einzelnen Schaltblöcke des in Figur 3 dargestellten Empfangs-Signalpfades. Ebenso ist dieser eine Empfangs-Signalpfad, in dem alle Schaltblöcke nur einfach vorkommen, für die Übertragung beider Empfangskanäle vorgesehen.

Die an die einzelnen Schaltungseinheiten angefügten, strichlierten Blöcke sollen verdeutlichen, daß die beiden Sendekanäle KS1 und KS2 im Zeitmultiplex über den einen Sende-Signalpfad und die beiden Empfangskanäle KE1 und KE2 im Zeitmultiplex über den einen Empfangs-Signalpfad übertragen werden können.

In dem einen Sende-Signalpfad, der im Zeitmultiplex die beiden Sendekanäle verarbeitet und in dem einen Empfangs-Signalpfad, der die beiden Empfangskanäle im Zeitmultiplex verarbeitet, entsteht ein Frequenzmultiplex-Signal (FDM), weil jedem Sendebeziehungsweise Empfangskanal im Modulator MOD beziehungsweise Demodulator DEM eine indivuduelle Kanalfrequenz zugewiesen wird. Im Sende-Signalpfad erfolgt durch einen Multiplexer, der Bestandteil der Frequenzweiche FWS ist, eine Auflösung der Zeitmultiplexverarbeitung. Die Zeitmultiplexverarbeitung im Empfangs-Signalpfad wird durch einen Demultiplexer ermöglicht, der Bestandteil der Frequenzweiche FWE ist. Mit anderen Worten: das Zeitmultiplex wird jeweils aufgelöst, bevor das Frequenzmultiplex stattfindet.

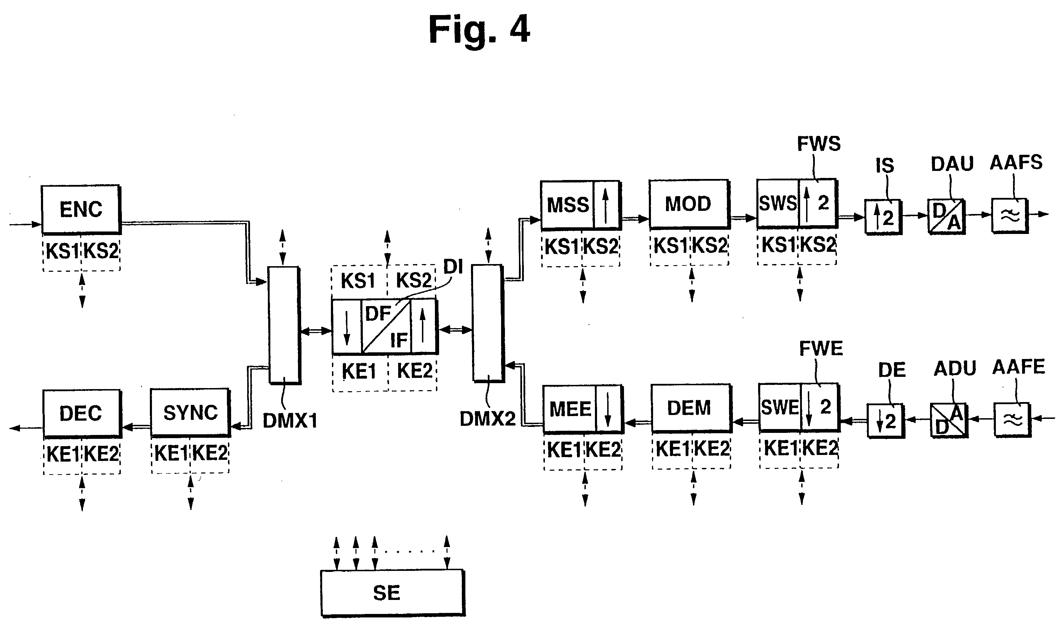

Eine weitere Konzentration der Schaltungseinheiten kann dadurch erfolgen, daß, wie in der Figur 4 dargestellt, bezüglich der variablen Dezimation und der variablen Interpolation beide Sendekanäle und beide Empfangskanäle gemultiplext werden. Dazu ist eine Funktionseinheit DI vorgesehen, die sowohl ein variables Dezimationsfilter DF als auch ein variables Interpolationsfilter IF enthält. Multiplexer/Demultiplexer DMX1 und DMX2 an beiden Toren der Funktionseinheit DI bewirken, daß sowohl die beiden Sendekanäle als auch die beiden Empfangskanäle im Zeitmultiplex über die Funktionseinheit DI übertragen werden können. Alle anderen Schaltungseinheiten, welche dieselben Bezugszeichen wie in Figur 3 aufweisen, haben auch dieselbe Funktion wie bei dem dort dargestellten Ausführungsbeispiel eines Modems.

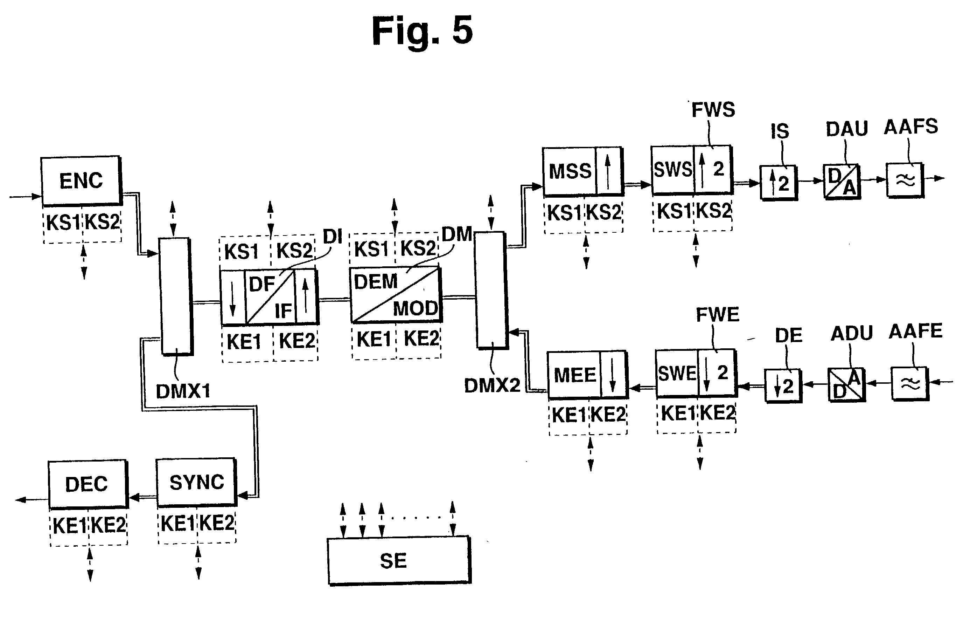

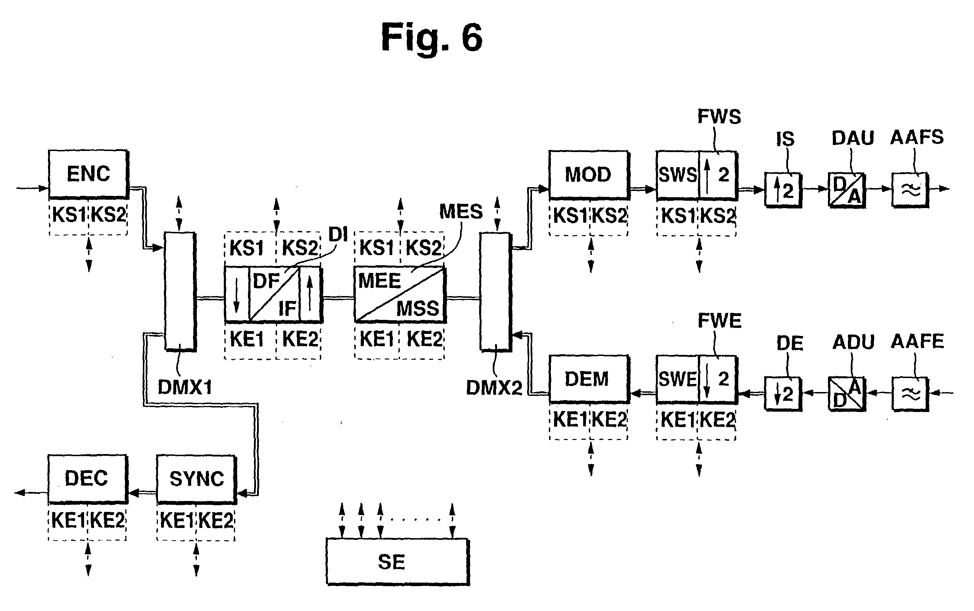

Bei dem in Figur 5 dargestellten Modem sind auch der Demodulator DEM und der Modulator MOD in einer gemeinsamen Funktionseinheit DM zusammengefaßt, welche sowohl die Sende- als auch die Empfangskanäle im Zeitmultiplex verarbeitet. Diese Schaltungsvariante des Modems bringt nochmals eine Reduzierung des Schaltungsaufwandes. Ungünstig dabei ist allerdings, daß der Interpolator MSS und der Dezimator MEE komplexe Koeffizienten aufweisen. Bei dem in Figur 6 dargestellten Ausführungsbeispiel ist daher die Reihenfolge von Modulator MOD und Interpolator MSS und die Reihenfolge von Demodulator DEM und Dezimator MEE vertauscht. Dadurch lassen sich der Interpolator MSS und der Dezimator MEE, die beide in einer Funktionseinheit MES zusammengefaßt sind, mit reellen Koeffizienten realisieren. Die Vorteile der Zeitmultiplexabarbeitung der Sende- und Empfangs-Signalpfade bleiben erhalten.

## Patentansprüche

1. Punkt-zu-Mehrpunkt Funkübertragungssystem, bestehend aus einer Zentralstation und mehreren Teilnehmerstationen, wobei die Übertragungskanäle zwischen der Zentralstation und den Teilnehmerstationen bedarfsweise zuteilbar sind, **dadurch gekennzeichnet,**
- **daß** die Zentralstation (ZS) für jeden der maximal zur Verfügung stehenden Übertragungskanäle ein Modem (MDM) aufweist und ebenfalls jede Teilnehmerstation (TS1, TS2 ... TSn) mit einem Modem (MDM) ausgestattet ist,
- **daß** eine Steuereinrichtung (SE) vorhanden ist, welche bei einer Veränderung der Übertragungskanäle in jedem betroffenen Modem (MDM) einen oder mehrere der Übertragungsparameter - Kanalträgerfrequenz, Datenrate, Modulation, Codierung, Sendepegel, Parameter zur Signalqualitätsbeurteilung - so einstellt, daß die Bandbreite des zur Verfügung stehenden Funkkanals optimal ausgenutzt wird,
- **daß** jedes Modem (MDM) zwei Sende- und zwei Empfangskanäle aufweist, wobei die Signalübertragung im Modem nur über einen der beiden Sende- beziehungsweise Empfangskanäle erfolgt,
- **daß** bei Änderung der Übertragungskanäle die Steuereinrichtung (SE) in dem jeweils nicht in Betrieb befindlichen Sende- beziehungsweise Empfangskanal die Einstellung der neuen Übertragungsparameter vornimmt, während die Signalübertragung in dem anderen Sendebeziehungsweise Empfangskanal fortgesetzt wird, und nach abeschlossener Akquisition der neuen Übertragungsparameter eine Umschaltung auf den zuvor nicht in Betrieb befindlichen Sende- beziehungsweise Empfangskanal erfolgt,
- **daß** eine erste Frequenzweiche (FWS) vorgesehen ist, welche das gesamte für das Aussenden von Signalen zur Verfügung stehende Frequenzband in mindestens zwei Teilbänder aufteilt, wobei die Signale der Sendekanäle den Teilbändern wahlweise zuteilbar sind,
- und **daß** eine zweite Frequenzweiche (FWE) vorgesehen ist, welche das für Empfangssignale zur Verfügung stehende gesamte Frequenzband in mindestens zwei Teilbänder aufteilt, wobei die Signale der Teilbänder wahlweise den Empfangskanälen zuteilbar sind.

2. Punkt-zu-Mehrpunkt Funkübertragungssystem nach Anspruch 1, **dadurch gekennzeichnet, daß** für jeden der beiden Sendekanäle ein Encoder (ENC1, ENC2) und ein Modulator (MOD1, MOD2) vorhanden sind und daß jedem Modulator (MOD1, MOD2) ein Interpolationsfilter mit einstellbarem Interpolationsfaktor (IF1, IF2) vorgeschaltet ist.

3. Punkt-zu-Mehrpunkt Funkübertragungssystem nach Anspruch 1, **dadurch gekennzeichnet, daß** der Frequenzweiche (FWS) für die Sendekanäle ein Interpolator (IS) nachgeschaltet ist, welcher das komplexe digitale Ausgangssignal der Frequenzweiche (FWS) in ein reelles digitales Signal umwandelt.

4. Punkt-zu-Mehrpunkt Funkübertragungssystem nach Anspruch 1, **dadurch gekennzeichnet, daß** die digitale Frequenzweiche (FWS) für die Sendekanäle die Abtastfrequenz ihres Eingangssignals verdoppelt.

5. Punkt-zu-Mehrpunkt Funkübertragungssystem nach Anspruch 1, **dadurch gekennzeichnet, daß** für jeden der beiden Empfangskanäle ein Demodulator (DEM1, DEM2) und ein Decoder (DEC1, DEC2) vorgesehen sind und daß jedem Demodulator (DEM1, DEM2) ein Dezimationsfilter mit einstellbarem Dezimationsfaktor (DF1, DF2) nachgeschaltet ist.

6. Punkt-zu-Mehrpunkt Funkübertragungssystem nach Anspruch 1, **dadurch gekennzeichnet, daß** der Frequenzweiche (FWE) für die Empfangskanäle ein Dezimator (DE) vorgeschaltet ist, der reelle digitale Empfangssignale in komplexe digitale Signale umwandelt.

7. Punkt-zu-Mehrpunkt Funkübertragungssystem nach Anspruch 1, **dadurch gekennzeichnet, daß** die digitale Frequenzweiche (FWE) für die Empfangskanäle die Abtastfrequenz ihres Ausgangssignals halbiert.

8. Punkt-zu-Mehrpunkt Funkübertragungssystem nach einem der vorhergehenden Ansprüche, **dadurch gekennzeichnet, daß** sich die Durchlaßbereiche der beiden Teilband-Filter (H1, H2) der Frequenzweichen (FWS, FWE) überlappen.

9. Punkt-zu-Mehrpunkt Funkübertragungssystem nach Anspruch 1, **dadurch gekennzeichnet, daß** für beide Sendekanäle ein Encoder (ENC), ein Modulator (MOD) und ein zwischen beiden eingefügtes Interpolationsfilter mit veränderbarem Interpolationsfaktor (IF) vorgesehen sind und daß beide Sendekanäle im Zeitmultiplex über den Encoder (ENC), den Modulator (MOD) und das variable Interpolationsfilter (IF) übertragbar sind.

10. Punkt-zu-Mehrpunkt Funkübertragungssystem nach Anspruch 1, **dadurch gekennzeichnet, daß** für beide Empfangskanäle ein Demodulator (DEM), ein Decoder (DEC) und ein zwischen beiden eingefügtes Dezimationsfilter mit veränderbarem Dezimationsfaktor (DF) vorgesehen sind und daß beide Empfangskanäle im Zeitmultiplex über den Demodulator (DEM), das Dezimationsfilter (DF) und den Decoder (DEC) übertragbar sind.

11. Punkt-zu-Mehrpunkt Funkübertragungssystem nach einem der Ansprüche 3 oder 6, **dadurch gekennzeichnet, daß** der Interpolator (IS) beziehungsweise der Dezimator (DE) als komplexes Halbbandfilter ausgeführt ist.

12. Punkt-zu-Mehrpunkt Funkübertragungssystem nach einem der Ansprüche 9 oder 10, **dadurch gekennzeichnet, daß** Multiplexer/Demultiplexer (DMX1, DMX2) sowohl die Sendekanäle als auch die Empfangskanäle im Zeitmultiplex über eine gemeinsame Funktionseinheit (DI) mit einem variablen Dezimations- und einem variablen Interpolationsfilter übertragen.

13. Punkt-zu-Mehrpunkt Funkübertragungssystem nach einem der Ansprüche 9 oder 10, **dadurch gekennzeichnet, daß** Multiplexer/Demultiplexer (DMX1, DMX2) sowohl die Sendekanäle als auch die Empfangskanäle im Zeitmultiplex über eine erste Funktionseinheit (DI) mit einem variablen Dezimations- und einem variablen Interpolationsfilter und über eine zweite Funktionseinheit (DM) mit einem Modulator und einem Demodulator übertragen.

14. Punkt-zu-Mehrpunkt Funkübertragungssystem nach einem der Ansprüche 9 oder 10, **dadurch gekennzeichnet, daß** Multiplexer/Demultiplexer (DMX1, DMX2) sowohl die Sendekanäle als auch die Empfangskanäle im Zeitmultiplex über eine erste Funktionseinheit (DI) mit einem variablen Dezimations- und einem variablen Interpolationsfilter und über eine zweite Funktionseinheit (MES) mit einem Interpolator und einem Dezimator mit festem Interpolationsfaktor beziehungsweise Dezimationsfaktor übertragen.

## Claims

1. Point-to-multipoint radio transmission system, consisting of a central base station and several subscriber terminals, it being possible for the transmission channels between the central base station and the subscriber terminals to be allocated when required, **characterised in**
- **that** the central base station (ZS) for each of the maximum available transmission channels comprises a modem (MDM) and each subscriber terminal (TS1, TS2 TSn) is likewise equipped with a modem (MDM),
- **that** a control device (SE) is present, which in the event of a change of the transmission channels in each particular modem (MDM) sets one or several of the transmission parameters - channel carrier frequency, data rate, modulation, encoding, transmitting level, parameters for signal quality assessment - so that the bandwidth of the available radio channel is used to the optimum,
- **that** each modem (MDM) comprises two transmitting- and two receiving channels, the signals only being transmitted in the modem via one of the two transmitting- or receiving channels,
- **that** in the event of a change in the transmission channels the control device (SE) in the transmitting- or receiving channel in each case not in use sets the new transmission parameters while the signals continue to be transmitted in the other transmitting or receiving channel and after the new transmission parameters have been acquired a change over to the transmitting- or receiving channel previously not in use takes place,
- **that** a first duplexer (FWS) is provided, which splits up the total available frequency band for transmitting signals into at least two subbands, it being possible for the signals of the transmitting channels to be optionally allocated to the subbands,
- **that** a second duplexer (FWE) is provided, which splits up the total available frequency band for receiving signals into at least two subbands, whereby the signals of the subbands can optionally be allocated to the receiving channels,

2. Point-to-multipoint radio transmission system according to claim 1, **characterised in that** an encoder (ENC1, ENC2) and a modulator (MOD1, MOD2) are present for each of the two transmitting channels and that each modulator (MOD1, MOD2) is followed by an interpolation filter with variable interpolation factor (IF1, IF2).

3. Point-to-multipoint radio transmission system according to claim 1, **characterised in that** the duplexer (FWS) for the transmitting channels is followed by an interpolator (IS), which converts the complex digital output signal of the duplexer (FWS) into a real digital signal.

4. Point-to-multipoint radio transmission system according to claim 1, **characterised in that** the digital duplexer (FWS) for the transmitting channels doubles the sampling frequency of its input signal.

5. Point-to-multipoint radio transmission system according to claim 1, **characterised in that** a demodulator (DEM1, DEM2) and a decoder (DEC1, DEC2) are provided for each of the two receiving channels and that each demodulator (DEM1, DEM2) is followed by a decimation filter with variable decimation factor (DF1, DF2).

6. Point-to-multipoint radio transmission system according to claim 1, **characterised in that** the duplexer (FWE) for the receiving channels is preceded by a decimator (DE), which converts real digital receiving signals into complex digital signals.

7. Point-to-multipoint radio transmission system according to claim 1, **characterised in that** the digital duplexer (FWE) for the receiving channels halves the sampling frequency of its output signals.

8. Point-to-multipoint radio transmission system according to one of the above claims, **characterised in that** the transmission areas of the two subband filters (H1, H2) overlap the duplexers (FWS, FWE).

9. Point-to-multipoint radio transmission system according to claim 1, **characterised in that** an encoder (ENC), a modulator (MOD) and an interpolation filter with variable interpolation factor (IF) inserted between each are provided for both transmitting channels and that both transmitting channels using time division multiple access can be transmitted via the encoder (ENC), modulator (MOD) and variable interpolation filter (IF).

10. Point-to-multipoint radio transmission system according to claim 1, **characterised in that** a demodulator (DEM), a decoder (DEC) and a decimation filter with variable decimation factor (DF) inserted between each are provided for both receiving channels and that both receiving channels using time division multiple access can be transmitted via the demodulator (DEM), decimation filter (DF) and decoder (DEC).

11. Point-to-multipoint radio transmission system according to one of claims 3 or 6, **characterised in that** the interpolator (IS) or the decimator (DE) is designed as complex half-band filter.

12. Point-to-multipoint radio transmission system according to one of claims 9 or 10, **characterised in that** multiplexers/demultiplexers (DMX1, DMX2) transmit both the transmitting channels as well as the receiving channels using time division multiple access via a common function unit (DI) with a variable decimation and a variable interpolation filter.

13. Point-to-multipoint radio transmission system according to one of claims 9 or 10, **characterised in that** multiplexers/demultiplexers (DMX1, DMX2) transmit both the transmitting channels as well as the receiving channels using time division multiple access via a first function unit (DI) with a variable decimation and a variable interpolation filter and via a second function unit (DM) with a modulator and a demodulator.

14. Point-to-multipoint radio transmission system according to one of claims 9 or 10, **characterised in that** multiplexers/demultiplexers (DMX1, DMX2) transmit both the transmitting channels as well as the receiving channels using time division multiple access via a first function unit (DI) with a variable decimation and a variable interpolation filter and via a second function unit (MES) with an interpolator and a decimator with fixed interpolation factor or decimation factor.

## Revendications

1. Système de radiotransmission point-multipoint, se composant d'un poste central et de plusieurs postes d'usager, dans lequel les canaux de transmission entre le poste central et les postes d'usager peuvent être attribués selon la nécessité, **caractérisé en ce que**,
- le poste central (PC) présente un modem (MDM) pour chacun des canaux de transmission disponible et que, pareillement, chaque poste d'usager (PU1, PU2, ..., PUn) est équipé d'un modem (MDM),
- il existe une unité de commande (UC) qui, en cas de changement des canaux de transmission dans chaque modem (MDM) concerné configure un ou plusieurs des paramètres de transmission - fréquence de la porteuse du canal, débit des données, modulation, codage, niveau d'émission, paramètres pour évaluer la qualité du signal - de manière à ce que la largeur de bande du radiocanal disponible soit exploitée au mieux,
- chaque modem (MDM) présente deux canaux d'émission et deux canaux de réception, la transmission des signaux dans le modem n'ayant lieu que par le biais d'un seul des deux canaux d'émission respectivement de réception,
- en cas de changement des canaux de transmission l'unité de commande (UC) réalise la configuration des nouveaux paramètres de transmission dans le canal d'émission respectivement canal de réception ne se trouvant pas en service, pendant que la transmission se poursuit dans l'autre canal d'émission respectivement canal de réception et qu'après l'acquisition terminée des nouveaux paramètres de transmission a lieu une commutation sur le canal d'émission respectivement canal de réception qui n'était pas en service auparavant,
- il est prévu un premier séparateur de fréquences (SFE) qui sépare toute la bande de fréquences disponible pour l'émission des signaux en au moins deux sous-bandes, les signaux des canaux d'émission pouvant être attribués au choix aux sous-bandes,
- et il est prévu un deuxième séparateur de fréquences (SFR) qui sépare toute la bande de fréquences disponible pour la réception des signaux en au moins deux sous-bandes, les signaux des canaux de réception pouvant être attribués au choix aux sous-bandes.

2. Système de radiotransmission point-multipoint selon la revendication 1, **caractérisé en ce qu'**il existe un encodeur (ENC1, ENC2) et un modulateur (MOD1, MOD2) pour chacun des deux canaux d'émission et qu'un filtre d'interpolation avec un facteur d'interpolation variable (FI1, FI2) est monté devant chaque modulateur (MOD1, MOD2).

3. Système de radiotransmission point-multipoint selon la revendication 1, **caractérisé en ce que** le séparateur de fréquences (SFE) pour les canaux d'émission est suivi d'un interpolateur (IE) qui convertit le signal de sortie numérique complexe du séparateur de fréquences (SFE) en un signal numérique réel.

4. Système de radiotransmission point-multipoint selon la revendication 1, **caractérisé en ce que** le séparateur de fréquences numérique (SFE) double la fréquence d'échantillonnage de son signal d'entrée pour les canaux d'émission.

5. Système de radiotransmission point-multipoint selon la revendication 1, **caractérisé en ce qu'**il est prévu un démodulateur (DEMI, DEM2) et un décodeur (DECI, DEC2) pour chacun des deux canaux de réception et qu'un filtre de décimation avec un facteur de décimation variable (FD1, FD2) est monté derrière chaque démodulateur (DEMI, DEM2).

6. Système de radiotransmission point-multipoint selon la revendication 1, **caractérisé en ce que** le séparateur de fréquences (SFR) pour les canaux de réception est précédé d'un décimateur (DR) qui convertit les signaux de réception numériques réels en des signaux numériques complexes.

7. Système de radiotransmission point-multipoint selon la revendication 1, **caractérisé en ce que** le séparateur de fréquences numérique (SFR) divise par deux la fréquence d'échantillonnage de son signal d'entrée pour les canaux de réception.

8. Système de radiotransmission point-multipoint selon l'une des revendications précédentes **caractérisé en ce que** les bandes passantes des deux filtres des sous-bandes (H1, H2) des séparateurs de fréquences (SFE, SFR) se recouvrent.

9. Système de radiotransmission point-multipoint selon la revendication 1, **caractérisé en ce qu'**il est prévu pour les deux canaux d'émission un encodeur (ENC), un modulateur (MOD) et, intercalé entre les deux, un filtre d'interpolation avec facteur d'interpolation modifiable (FI) et que les deux canaux d'émission peuvent être transmis dans le multiplexage temporel via l'encodeur (ENC), le modulateur (MOD) et le filtre d'interpolation variable (FI).

10. Système de radiotransmission point-multipoint selon la revendication 1, **caractérisé en ce qu'**il est prévu pour les deux canaux de réception un démodulateur (DEM), un décodeur (DEC) et, intercalé entre les deux, un filtre de décimation avec facteur de décimation modifiable (FD) et que les deux canaux de réception peuvent être transmis dans le multiplexage temporel via le démodulateur (DEM), le filtre de décimation (FD) et le décodeur (DEC).

11. Système de radiotransmission point-multipoint selon l'une des revendications 3 ou 6, **caractérisé en ce que** l'interpolateur (IE) ou le décimateur (DR) sont des filtres demi-bande complexes.

12. Système de radiotransmission point-multipoint selon l'une des revendications 9 ou 10, **caractérisé en ce que** les multiplexeurs/démultiplexeurs (DMX1, DMX2) transmettent aussi bien les canaux d'émission que les canaux de réception dans le multiplexage temporel par le biais d'un bloc fonctionnel commun (DI) avec un filtre de décimation variable et un filtre d'interpolation variable.

13. Système de radiotransmission point-multipoint selon l'une des revendications 9 ou 10, **caractérisé en ce que** les multiplexeurs/démultiplexeurs (DMX1, DMX2) transmettent aussi bien les canaux d'émission que les canaux de réception dans le multiplexage temporel par le biais d'un premier bloc fonctionnel (DI) avec un filtre de décimation variable et un filtre d'interpolation variable et par le biais d'un deuxième bloc fonctionnel (DM) avec un modulateur et un démodulateur.

14. Système de radiotransmission point-multipoint selon l'une des revendications 9 ou 10, **caractérisé en ce que** les multiplexeurs/démultiplexeurs (DMX1, DMX2) transmettent aussi bien les canaux d'émission que les canaux de réception dans le multiplexage temporel par le biais d'un premier bloc fonctionnel (DI) avec un filtre de décimation variable et un filtre d'interpolation variable et par le biais d'un deuxième bloc fonctionnel (MRE) avec un interpolateur et un décimateur avec facteur d'interpolation ou facteur de décimation fixe.
